# EUROPÄISCHE PATENTANMELDUNG

(11) **EP 4 227 376 A1**
(43) Veröffentlichungstag der Anmeldung: **16.08.2023**
(21) Anmeldenummer: 22156537.7
(22) Anmeldetag: 14.02.2022
(51) Int. Cl.: C09J 7/50

(54) **KLEBEFOLIE**

(71) Anmelder: Hueck Folien Gesellschaft m.b.H., 4342 Baumgartenberg (AT)
(72) Erfinder: Aigner, Georg, 4482 Ennsdorf (AT); Ricker, Waltraud, 3321 Ardagger Markt (AT)
(74) Vertreter: KLIMENT & HENHAPEL

(57) **Zusammenfassung**

Die Erfindung betrifft eine Klebefolie, insbesondere aus Kunststoff, umfassend eine Beschichtung mit einem Lackfilm, dadurch gekennzeichnet, dass im Lackfilm Pigmente mit einem mittleren Durchmesser enthalten sind, der größer ist als die Schichtdicke des Lackfilms.

## Beschreibung

Die Erfindung betrifft eine Klebefolie, insbesondere aus Kunststoff, umfassend eine Beschichtung mit einem Lackfilm.

Kunststoffe sind Materialien mit vergleichsweise geringer freier Oberflächenenergie und entsprechend geringer Grenzflächenhaftung beim Verkleben, Beschichten oder Bedrucken. Hierdurch kann eine fehlgeschlagene Verklebung mit Klebemittel oder eine schwache Versiegelung auftreten. Ebenso kann dieses Haftungsproblem dazu führen, dass die aufgedruckte Druckfarbe abgerieben wird oder dass Farbe nicht auf der Oberfläche haften bleibt.

Bei Klebebändern oder Klebeetiketten, wie sie zum Beispiel in der Elektronikindustrie eingesetzt werden, muss beispielsweise sichergestellt sein, dass sich der Klebstoff mit dem Klebeband vom Substrat ablöst, also keine Klebstoffrückstände auf dem Substrat verbleiben, die das Produkt beeinträchtigen würden.

Auch bei wiederablösbaren Klebstoffen, die unter anderem bei Frischhalteverpackungen von Lebensmitteln, Feuchttüchern, etc. eingesetzt werden, ist es erforderlich, dass der Klebstoff auf dem Trägermaterial bleibt, da anderenfalls die Funktion verloren geht.

Weiters müssen doppelseitige Klebebänder, die für eine permanente Verklebung, wie beispielsweise für die Verklebung von Bauteilen in der Automobilindustrie, eingesetzt werden, eine derart gute Haftung aufweisen, dass kein Ablösen mehr möglich ist.

Standardfolien können bei den oben genannten Anwendungen jedoch nicht verwendet werden, da bei diesen ein Klebstofftransfer nicht zu verhindern ist. Allerdings bewirkt eine gute Benetzbarkeit der Oberfläche allein noch keine gute Haftung. Es ist somit eine Modifizierung der Folienoberfläche notwendig. Um zum Beispiel Klebebänder und Verpackungsmaterialien mit den erforderlichen Eigenschaften bereitstellen zu können, wird daher häufig die freie Oberflächenenergie der Folie durch eine Vorbehandlung erhöht. Übliche Verfahren bei Kunststofffolien sind hierbei Plasma-, Korona- oder Flammbehandlung sowie die Einwirkung oxidierender Gase wie Ozon oder Fluor.

Eine weitere im Stand der Technik angewandte Methode zur Modifizierung der Oberflächenenergie einer Folie ist die chemische Behandlung mit Trichloressigsäure (TCA). Hierbei wird die Folie durch TCA geätzt, wodurch eine molekulare Modifizierung der Oberfläche erzielt wird, die sich vorteilhaft auf die Hafteigenschaften auswirkt.

Beispielsweise offenbart die WO 2018/011237 A1 ein Verfahren zur Herstellung einer einseitigen Klebefolie, wobei die Trägerschicht in Form eines Polyesterfilms (Polyesterterephthalat - PET) vor dem Verbinden mit der Klebstoffschicht z.B. mit Trichloressigsäure behandelt wird, um die Oberflächenenergie des Polyesterfilms zu erhöhen.

Die Behandlung mit TCA hat jedoch den Nachteil, dass die PET-Folien beim Anätzen milchig bzw. matt werden, was deren Optik stark beeinträchtigt. Zudem können nur unbehandelte Folien, d.h. solche ohne bereits bestehende Beschichtungen, z.B. mit Metall, behandelt werden.

Ein Hauptproblem der TCA-Modifizierung besteht aber in der Trichloressigsäure selbst, die aufgrund ihrer stark ätzenden Wirkung nur schwierig zu handhaben ist und eine Sicherheitsgefahr für die Beschäftigten und die Umwelt darstellt.

Eine andere gängige Methode zur Verbesserung der Haftungseigenschaften von Folien ist die Beschichtung mit einem Haftvermittler oder sogenannten Primer.

Um das Problem der mangelnden Haftung der Metallschicht auf der Folie zu lösen, lehrt beispielsweise die EP 3 733 749 A1, zwischen der Folie und der metallischen Schicht eine Haftvermittlerschicht aufzubringen, die aus einem wässrigen Lacksystem auf Basis eines selbstvernetzenden und/oder eines mit Härter vernetzbaren Polymers, z.B. Polyurethan, besteht.

In der JP 2000053930 A wird eine Primerschicht für ein Klebeband aus einer Polyethylenterephthalat (PET)-Folie beschrieben, wobei die Primerschicht, die aus einem Harz auf Polyesterbasis besteht, zwischen einer Schicht eines Klebers auf Basis von Urethan, Acryl oder Silikon und der PET-Folie gebildet wird.

Die JPS5269942A beschreibt ein Klebeband, dem mittels einer Primerschicht eine verbesserte Haftung zwischen dem Polyester-Träger und einer lichtabschirmenden Farbschicht verliehen wird, wobei der Primer aus einer Mischung eines Vinylidenchlorid-Copolymers mit einem Isocyanat-Gruppen enthaltenden Polyurethan-Vorkondensat gebildet ist.

Die Erfindung stellt sich die Aufgabe, die Eigenschaften von Klebefolien, insbesondere aus Kunststoff, zu verbessern, ohne dass hierfür die Folienoberfläche einer kostspieligen Modifizierung oder potentiell gesundheits- und umweltgefährdenden Behandlung, wie dem Ätzen mit TCA, unterzogen werden muss und auch ohne eine Haftvermittlerschicht mit speziell geeigneter Primerzusammensetzung aufbringen zu müssen. Insbesondere soll eine Klebefolie bereitgestellt werden, die verbesserte Hafteigenschaften besitzt und vor allem bei Klebebeschichtungen höhere Haftwerte erzielt, damit bei der Verwendung der Klebefolie, z.B. als Klebeband, kein Klebstofftransfer stattfindet.

Diese Aufgabe wird bei einer Klebefolie der eingangs genannten Art erfindungsgemäß durch die Merkmale des unabhängigen Anspruchs 1 gelöst. Vorteilhafte Weiterbildungen der Erfindung sind Gegenstand der Unteransprüche.

Gegenstand der Erfindung ist eine Klebefolie, insbesondere aus Kunststoff, umfassend eine Beschichtung mit einem Lackfilm, welche dadurch gekennzeichnet ist, dass im Lackfilm Pigmente mit einem mittleren Durchmesser enthalten sind, der größer ist als die Schichtdicke des Lackfilms.

Vorzugsweise ist der Durchmesser der Partikel im Bereich von 2,0 - 12 µm, insbesondere beträgt der mittlere Durchmesser 4 - 6 µm.

Dadurch, dass im Lackfilm Pigmente vorgesehen sind, deren mittlerer Durchmesser größer als die Schichtdicke des Lackfilms ist, wird eine Vergrößerung der Oberfläche der Schicht bzw. der Folie bewirkt, die zu höheren Haftwerten führt.

Gemäß einer bevorzugten Ausführungsform beträgt der Gewichtsanteil des Pigments im Lackfilm 1-50%, vorzugsweise 10-30%, bezogen auf den nicht flüchtigen Anteil (nfA) des Bindemittels des Lacks.

Die Pigmente, die erfindungsgemäß zum Einsatz kommen können, sind vorzugsweise ausgewählt aus anorganischen oder organischen Pigmenten, wobei von den anorganischen Pigmenten Erden, Mineralien, Metalleffektpigmente, Weißpigmente, Eisenoxidpigmente, Zirkonsilikate und polymere Pigmente besonders bevorzugt werden.

In einer besonders bevorzugten Ausgestaltung der Erfindung ist das Pigment ein Polyamidpigment, vorzugsweise PA66 oder PA12.

Gemäß einer weiteren Ausführungsform ist der Lackfilm, mit dem die Klebefolie beschichtet ist, eine Haftvermittlerschicht.

Haftvermittler, auch Primer genannt, sind Mittel, die die Adhäsionseigenschaften von Oberflächen verbessern. Haftvermittler werden für stark beanspruchte oder schwer zu beklebende bzw. schwer haftende Oberflächen und Beschichtungen zur Erhöhung der Haftfestigkeit der jeweils aufzubringenden Substanzen verwendet. Durch eine erhöhte Haftfestigkeit werden oft auch die Beständigkeit gegen Wasser und Chemikalien sowie der Korrosionsschutz verbessert. Haftvermittler finden insbesondere im Druck, bei Lackierungen und bei Klebebändern Anwendung.

Durch eine Haftvermittlerschicht wird somit die Haftung zwischen den auf die Folie aufzubringenden Schichten, z.B. Kleber, Farbe etc., vorteilhaft zusätzlich verstärkt.

Vorzugsweise ist der Haftvermittler der Haftvermittlerschicht ein Ethylen-Acrylsäure (EAA) - Copolymer.

Bevorzugt anwendbar ist die Erfindung auf Folien, die ausgewählt sind aus Polyimid (PI), Polypropylen (PP), monoaxial orientiertem Polypropylen (MOPP), biaxial orientiertem Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristallinen Polymeren (LCP), Polyester, Polybutylenterephthalat (PBT), Polyethylenterephthalat (PET), Polyamid (PA), Polycarbonat (PC), Cycloolefincopolymeren (COC), Polyoximethylen (POM), Acrylnitril-Butadien-Styrol (ABS), Polyvinylchlorid (PVC), Ethylentetrafluorethylen (ETFE), Polytetrafluorethylen (PTFE), Tetrafluorethylen-Perfluorpropylvinylether-Fluorcopolymer (PFA), Tetrafluormethylen-Perfluorpropylvinylether-Fluorcopolymer (MFA), Polyvinylfluorid (PVF), Polyvinylidenfluorid (PVDF), Ethylen-Tetrafluorethylen-Hexafluorpropylen-Fluorterpolymer (EFEP), Polymethylmethacrylat (PMMA), Cellulose- oder Lignin-basierten Kunststoffen, Polyhydroxyalkanoaten (PHA), thermo-plastischer Stärke (TPS), Polymilchsäure (PLA), Polycaprolacton (PCL), Polybutylensuccinat (PBS), Polybutylenadipat-Terephthalat (PBAT) und/oder Mischungen und/oder Co-Polymeren dieser Materialien und/oder Verbundstoffen aus Papier oder Metall und diesen Materialien.

Das Kunststoffmaterial der Folien kann recycelbar sein oder sogar schon aus recyceltem Material hergestellt sein. Insbesondere kann es auch aus nachwachsenden Rohstoffen hergestellt sowie biologisch und/oder marin abbaubar sein.

Vorzugsweise wird die Erfindung auf eine PET-Folie angewandt. Bei dieser Art von Kunststofffolie kommt der Vorteil der Erfindung besonders zum Tragen, da eine Haftverbesserung bislang in der Regel mittels der nachteiligen TCA-Behandlung der Polyesterfolie vorgenommen wird.

Es ist jedoch zu verstehen, dass die verbesserten Hafteigenschaften erfindungsgemäß bei jeder anderen Art von (Kunststoff)Folie, insbesondere den oben genannten Materialien, erhältlich sind.

In einer bevorzugten Ausführungsform der Erfindung weist die Klebefolie auf beiden Seiten eine Beschichtung mit dem Lackfilm auf.

Eine weitere bevorzugte Ausbildung der Erfindung ist dadurch gekennzeichnet, dass die Klebefolie eine Metallisierungsschicht aufweist, wobei die Beschichtung mit dem Lackfilm auf der Metallisierungsschicht aufgebracht ist.

Da Oberflächenmodifizierungen wie die TCA-Behandlung bei Folien, die schon Schichten, z.B. eine Metallisierung, aufweisen, nicht angewandt werden können, war es bislang schwierig, beschichtete Folien mit einer guten Haftung für weitere Materialschichten, wie Farbe, Klebstoff etc., zu versehen. Die Erfindung ist nun in der Lage, auch bereits beschichtete Folien mit verbesserten Haftungseigenschaften bereitzustellen.

Gemäß einer besonders vorteilhaften Ausgestaltung der Erfindung beträgt die Zugfestigkeit beim Aufbringen einer Selbstklebebeschichtung auf dem Lackfilm (Verbundhaftung) > 6 N/15 mm.

Die Erfindung wird nachfolgend anhand eines Beispiels und der Zeichnung näher erläutert. Dabei zeigt
Fig. 1 den schematischen Aufbau eines Klebebandmaterials mit einer Klebefolie gemäß einer Ausführungsform der Erfindung,
Fig. 2 den schematischen Aufbau eines metallisierten Etiketts oder Frischesiegels mit einer Klebefolie gemäß einer Ausführungsform der Erfindung, und
Fig. 3 den schematischen Aufbau eines doppelseitigen Klebebands mit einer Klebefolie gemäß einer Ausführungsform der Erfindung.

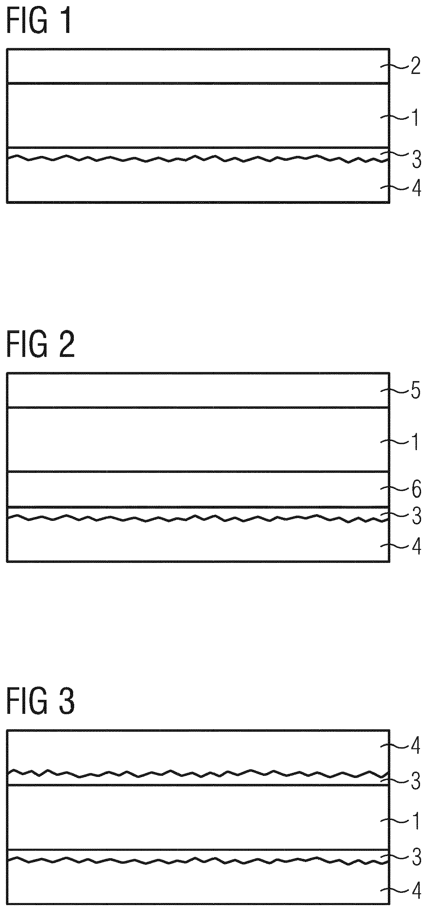

Der Schichtaufbau der Fig. 1 zeigt eine Trägerfolie 1, beispielsweise eine PET-Folie, die auf einer Seite mit einer Silikonisierung oder Carbamatbeschichtung 2 versehen ist. Die Beschichtung 2, auch als "Releasecoating" bezeichnet, verhindert das Zusammenkleben der Lagen, wenn die Folie in Form einer Rolle aufgewickelt wird.

Auf der anderen Seite ist die Trägerfolie 1 mit einem Lackfilm 3 beschichtet, der in einer bevorzugten Ausführungsform eine Haftvermittler- bzw. Primerschicht sein kann, vorzugsweise ein Ethylen-Acrylsäure-Copolymer, insbesondere mit Polyurethan modifiziert. Die Aufbringung des Lacks auf der Trägerfolie 1 kann beispielsweise mit einem Rasterzylinder erfolgen, der ein gutes Verfließen der Lackschicht gewährleistet. In diesem Lackfilm 3, dessen Auftragsdicke bzw. -gewicht z.B. 0,2 g/m² beträgt, sind erfindungsgemäß Pigmente enthalten, die einen mittleren Durchmesser aufweisen, der größer ist als die Schichtdicke des Lackfilms 3, nämlich im Bereich von 2,0 - 12 µm, um die Oberfläche der Lackfilmschicht zu vergrößern. Als Pigmente kommen vorzugsweise Erden, Mineralien, Metalleffektpigmente, Weißpigmente, Eisenoxidpigmente, Zirkonsilikate und polymere Pigmente in Frage. Besonders bevorzugte Pigmente sind beispielsweise die Polyamidpigmente PA66 oder PA12. Der Gewichtsanteil des Pigments im Lackfilm beträgt 1-50%, bezogen auf den nicht flüchtigen Anteil des Bindemittels des Lacks.

Auf dem Lackfilm 3 ist eine Selbstklebebeschichtung 4 aufgebracht, die z.B. auf konventionellen Acrylat- oder Hotmelt-Klebstoffen basiert und für die Verwendung in der Elektronikindustrie geeignet ist.

Der in Fig. 2 dargestellte Schichtaufbau des Etiketts oder Frischesiegels umfasst neben der Trägerfolie 1, die im Unterschied zu Fig. 1 auf der einen Seite der Folie keine Silikon- oder Carbamatbeschichtung aufweist sondern mit einer Farbschicht 5 vollflächig oder partiell bedruckt ist, eine Metallisierungsschicht 6, z.B. eine Schicht aus Al, auf welcher der die Pigmente enthaltende Lackfilm 3 aufgebracht ist. Die Metallisierungsschicht 6 kann beispielsweise durch PVD- oder CVD-Verfahren, durch Sputtern oder Elektronenstrahlbedampfung abgeschieden werden und abhängig von der spezifischen Verwendung der Folie etwa 5-100 nm dick sein.

Wie schon in dem in Fig. 1 dargestellten Klebebandaufbau befindet sich auf dem Lackfilm 3 eine Selbstklebebeschichtung 4, die in diesem Fall einen für ein wiederholtes Ablösen und Ankleben des Etiketts oder Frischesiegels geeigneten Klebstoff enthält.

Fig. 3 zeigt eine Trägerfolie 1, die im Unterschied zur Ausführungsform der Klebefolie der Fig. 1 auf beiden Seiten eine Beschichtung mit dem Lackfilm bzw. der Haftvermittlerschicht 3 aufweist, auf der jeweils eine Kleberschicht 4 aufgebracht ist.

Mit einem derartigen doppelseitigen Klebeband können Gegenstände, z.B. Teile in der Automobilindustrie, permanent miteinander verbunden werden, da das Klebeband aufgrund der erfindungsgemäßen Folie über bessere Hafteigenschaften als herkömmliche doppelseitige Klebebänder verfügt.

### Beispiel

Es wurden die Haftwerte einer erfindungsgemäßen Klebefolie mittels einer Zugprüfmaschine (Zwick-Messmethode) untersucht. Bei der untersuchten Klebefolie handelte es sich um eine PET-Folie mit folgendem Lackfilm:
Beschichtung: Ethylen-Acrylsäure-Copolymer (EAA), mit Polyurethan modifiziert
Schichtdicke: 0,2 g/m²
Pigment: Polyamid 66

Zur Messung der Hafteigenschaften der Klebefolien wurde folgender Prüfvorgang durchgeführt:
Auf der zu prüfenden Klebefolie wird quer zur Laufrichtung ein Stück des vorgeschriebenen Klebefilms am Prüfmuster aufgeklebt und mit einer Walze festgedrückt. Anschließend wird der Klebefilm in gleichmäßigem Zug in einem Abzugswinkel von 90° von der zu prüfenden Klebefolie abgezogen.

Die durchgeführten Messungen ergaben, dass die Haftung des Lacksystems der Klebefolie >6 N/15 mm betrug. Der Kleber des Klebefilms blieb auf dem Lackfilm der Klebefolie haften, was zeigt, dass die Hafteigenschaften der erfindungsgemäßen Klebefolie im Vergleich zu den Klebefolien des Standes der Technik signifikant verbessert sind und die Klebefolie z.B. in vorteilhafter Weise zur Verwendung bei einem Klebeband für die Elektronikindustrie eingesetzt werden kann.

## Patentansprüche

1. Klebefolie, insbesondere aus Kunststoff, umfassend eine Beschichtung mit einem Lackfilm, **dadurch gekennzeichnet, dass** im Lackfilm Pigmente mit einem mittleren Durchmesser enthalten sind, der größer ist als die Schichtdicke des Lackfilms.

2. Klebefolie nach Anspruch 1, **dadurch gekennzeichnet, dass** der Durchmesser der Partikel im Bereich von 2,0 - 12 µm ist, vorzugsweise der mittlere Durchmesser 4 - 6 µm beträgt.

3. Klebefolie nach Anspruch 1 oder 2, **dadurch gekennzeichnet, dass** der Gewichtsanteil des Pigments im Lackfilm 1-50%, vorzugsweise 10-30%, bezogen auf den nicht flüchtigen Anteil (nfA) des Bindemittels des Lacks, beträgt.

4. Klebefolie nach einem der Ansprüche 1 bis 3, **dadurch gekennzeichnet, dass** die Pigmente ausgewählt sind aus anorganischen oder organischen Pigmenten.

5. Klebefolie nach einem der Ansprüche 1 bis 4, **dadurch gekennzeichnet, dass** die anorganischen Pigmente ausgewählt sind aus Erden, Mineralien, Metalleffektpigmenten, Weißpigmenten, Eisenoxidpigmenten, Zirkonsilikaten und polymeren Pigmenten.

6. Klebefolie nach Anspruch 5, **dadurch gekennzeichnet, dass** das Pigment ein Polyamidpigment ist, vorzugsweise PA66 oder PA12.

7. Klebefolie nach einem der Ansprüche 1 bis 6, **dadurch gekennzeichnet, dass** der Lackfilm eine Haftvermittlerschicht ist.

8. Klebefolie nach Anspruch 7, **dadurch gekennzeichnet, dass** der Haftvermittler der Haftvermittlerschicht ein Ethylen-Acrylsäure-Copolymer ist.

9. Klebefolie nach einem der Ansprüche 1 bis 8, **dadurch gekennzeichnet, dass** die Folie ausgewählt ist aus Polyimid (Pl), Polypropylen (PP), monoaxial orientiertem Polypropylen (MOPP), biaxial orientiertem Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristallinen Polymeren (LCP), Polyester, Polybutylenterephthalat (PBT), Polyethylenterephthalat (PET), Polyamid (PA), Polycarbonat (PC), Cycloolefincopolymeren (COC), Polyoximethylen (POM), Acrylnitril-Butadien-Styrol (ABS), Polyvinylchlorid (PVC), Ethylentetrafluorethylen (ETFE), Polytetrafluorethylen (PTFE), Tetrafluorethylen-Perfluorpropylvinylether-Fluorcopolymer (PFA), Tetrafluormethylen-Perfluorpropylvinylether-Fluorcopolymer (MFA), Polyvinylfluorid (PVF), Polyvinylidenfluorid (PVDF), Ethylen-Tetrafluorethylen-Hexafluorpropylen-Fluorterpolymer (EFEP), Polymethylmethacrylat (PMMA), Cellulose- oder Lignin-basierten Kunststoffen, Polyhydroxyalkanoaten (PHA), thermo-plastischer Stärke (TPS), Polymilchsäure (PLA), Polycaprolacton (PCL), Polybutylensuccinat (PBS), Polybutylenadipat-Terephthalat (PBAT) und/oder Mischungen und/oder Co-Polymeren dieser Materialien und/oder Verbundstoffen aus Papier oder Metall und diesen Materialien.

10. Klebefolie nach Anspruch 9, **dadurch gekennzeichnet, dass** sie eine PET-Folie ist.

11. Klebefolie nach einem der Ansprüche 1 bis 10, **dadurch gekennzeichnet, dass** sie auf beiden Seiten eine Beschichtung mit dem Lackfilm aufweist.

12. Klebefolie nach einem der Ansprüche 1 bis 11, **dadurch gekennzeichnet, dass** sie eine Metallisierungsschicht aufweist, wobei die Beschichtung mit dem Lackfilm auf der Metallisierungsschicht aufgebracht ist.

13. Klebefolie nach einem der Ansprüche 1 bis 12, **dadurch gekennzeichnet, dass** die Zugfestigkeit beim Aufbringen einer Selbstklebebeschichtung auf dem Lackfilm (Verbundhaftung) > 6 N/15 mm beträgt.
